# EUROPEAN PATENT APPLICATION

(11) **EP 2 852 155 A1**
(43) Date of publication of application: **25.03.2015**
(21) Application number: 14186205.2
(22) Date of filing: 24.09.2014
(51) Int. Cl.: H04N 7/14, G06Q 30/02

(54) **System and method for shoppable video feed**

(30) Priority: 24.09.2013 US 201314035604
(71) Applicant: Google Inc., Mountain View, CA 94043 (US)
(72) Inventor: Brock, Meghan, Mountain View, CA California 94043 (US); Jones, Laura, Mountain View, CA California 94043 (US); Ittigson, Matt, Mountain View, CA California 94043 (US); Tran, Victoria, Mountain View, CA California 94043 (US); Corby, Karen, Mountain View, CA California 94043 (US); Tobaccowala, Ria, Mountain View, CA California 94043 (US); Schlossberg, Bette Ann, Mountain View, CA California 94043 (US); Fulay, Amit, Mountain View, CA California 94043 (US)
(74) Representative: Ekstedt, Måns

(57) **Abstract**

A method and computing system are disclosed for enabling shoppable video feeds. A video conference between a plurality of participant may be enabled. A video feed associated with the video conference may be broadcast to a plurality of viewers. An indicator of one or more retail items may be associated with the video feed. An interactive user interface may be provided to a viewer of the video feed in response to a selection of the indicator by the viewer. The viewer may be enabled to perform one or more activities relative to the one or more retail items via the interactive user interface.

## Description

### TECHNICAL FIELD

This disclosure relates to video conferencing and, more particularly, to allowing viewers of a video conference view and purchase retail items

### BACKGROUND

The Internet currently allows for the free exchange of ideas and information in a manner that was unimaginable only a couple of decades ago. One such use for the Internet is as a communication medium, whether it is via one-on-one exchanges or multiparty exchanges. For example, two individuals may exchange private emails with each other. Alternatively, multiple people may participate on a public website in which they may post entries that are published for multiple people to read. Examples of such websites may include but are not limited to product / service review sites and topical blogs.

One such use of the Internet is to allow people to video conference with each other. As video conferencing adds a video component to a communication session, such communication sessions tend to be more enjoyable for the participants. Unfortunately, video conferences typically only allow for a limited number of participants, often resulting in the exclusion of many who would have liked to participate.

### SUMMARY OF DISCLOSURE

In one implementation, a computer-implemented method may include enabling, by a computing device, a video conference between a plurality of participants. The method may also include broadcasting a video feed associated with the video conference to a plurality of viewers. The method may also include defining a list of retail items available from one or more vendors. The method may also include associating an indicator of the list with the video feed. The method may also include providing an interactive user interface to a viewer of the video feed in response to a selection of the indicator by the viewer. The interactive user interface may be a non-disruptive user interface relative to the video feed. The method may further include enabling the viewer to perform one or more activities relative to the one or more retail items via the interactive user interface, the one or more activities.

According to another implementation, a computer-implemented method may include enabling, by a computing device, a video conference between a plurality of participants. The method may also include broadcasting a video feed associated with the video conference to a plurality of viewers. The method may also include associating an indicator of one or more retail items with the video feed. The method may also include providing an interactive user interface to a viewer of the video feed in response to a selection of the indicator by the viewer. The method may further include enabling the viewer to perform one or more activities relative to the one or more retail items via the interactive user interface.

One or more of the following features may be included. Associating the indicator may include defining a list of retail items available from one or more vendors. Associating the indicator may include dynamically modifying the list of retail items. The indicator may include a link to the list of retail items. The indicator may include a launchable instantiation of the list of retail items. A visual emphasis of the indicator may be provided during a defined portion of the video feed.

The interactive user interface may include a non-disruptive user interface relative to the video feed. The one or more activities may include one or more of: purchasing at least one of the one or more items from a vendor, saving at least one of the one or more items to a viewer-specific list, receiving additional information regarding at least one of the one or more items, and sharing information about at least one of the one or more items with another individual.

The method may also include providing a recording of the video feed as web content associated with one or more webpages. The recording of the video feed may include the indicator of the one or more retail items. The web content may include one or more of a rich media advertisement, a video on demand product, and video component of a webpage.

According to another implementation, a computing system may include a processor and a memory configured to perform operations that may include enabling a video conference between a plurality of participants. A video feed associated with the video conference may be broadcast to a plurality of viewers. An indicator of one or more retail items may be associated with the video feed. An interactive user interface may be provided to a viewer of the video feed in response to a selection of the indicator by the viewer. The computing system may further enable the viewer to perform one or more activities relative to the one or more retail items via the interactive user interface.

One or more of the following features may be included. Associating the indicator may include defining a list of retail items available from one or more vendors. Associating the indicator may include dynamically modifying the list of retail items. The indicator may include a link to the list of retail items. The indicator may include a launchable instantiation of the list of retail items. A visual emphasis of the indicator may be provided during a defined portion of the video feed.

The interactive user interface may include a non-disruptive user interface relative to the video feed. The one or more activities may include one or more of: purchasing at least one of the one or more items from a vendor, saving at least one of the one or more items to a viewer-specific list, receiving additional information regarding at least one of the one or more items, and sharing information about at least one of the one or more items with another individual.

The computing system may be further configured for providing a recording of the video feed as web content associated with one or more webpages. The recording of the video feed may include the indicator of the one or more retail items. The web content may include one or more of a rich media advertisement, a video on demand product, and video component of a webpage.

The details of one or more implementations are set forth in the accompanying drawings and the description below. Other features and advantages will become apparent from the description, the drawings, and the claims.

### BRIEF DESCRIPTION OF THE DRAWINGS

FIG. 1 is a diagrammatic view of a distributed computing network including a computing device that executes a video conferencing process according to an implementation of the present disclosure;
FIG. 2 is a flowchart of the video conferencing process of FIG. 1 according to an example implementation of the present disclosure;
FIG. 3 is a diagrammatic view of a video conference managed by the video conferencing process of FIG. 1 according to an example implementation of the present disclosure;
FIG. 4 is a diagrammatic view of a user interface rendered by the video conferencing process of FIG. 1 according to an example implementation of the present disclosure;

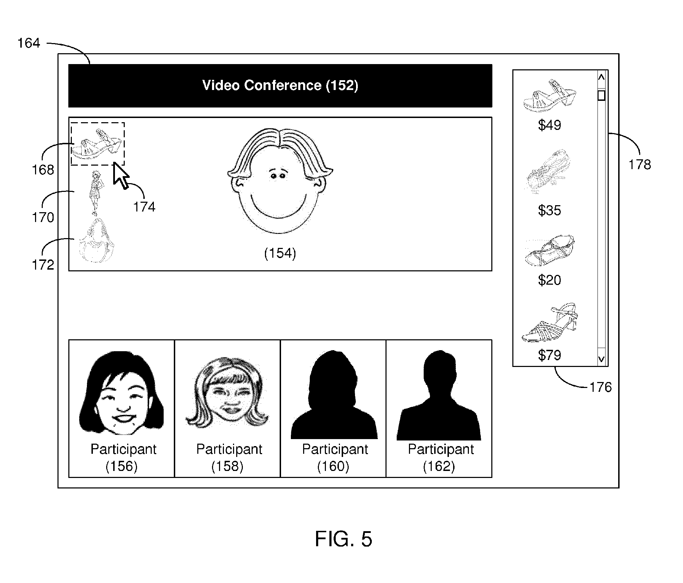

FIG. 5 is a diagrammatic view of a user interface rendered by the video conferencing process of FIG. 1 according to an example implementation of the present disclosure; and
FIG. 6 is a diagrammatic view of the computing device of FIG. 1, according to an implementation of the present disclosure.

Like reference symbols in the various drawings indicate like elements.

### DETAILED DESCRIPTION OF THE EXAMPLE EMBODIMENTS

Video content may often be amenable to related retail component. That is, video content may be directed toward marketing retail products, or it may be indirectly capable of providing retail motivation. In some embodiments, the disclosure may provide features that may allow, or even motivate, viewers of a broadcast of a multi-participant video conference to discover retail items that may be related to the subject matter of the video conference, or may be otherwise related to the video conference. As such, the broadcast of the video conference may be utilized to directly or indirectly to realize retail opportunities.

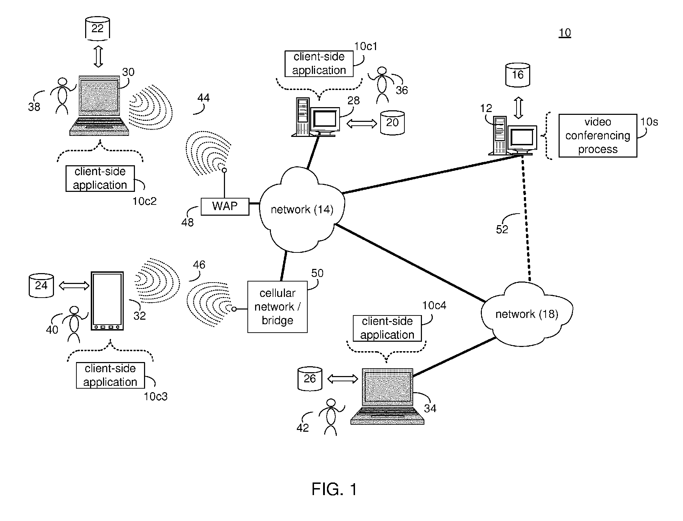

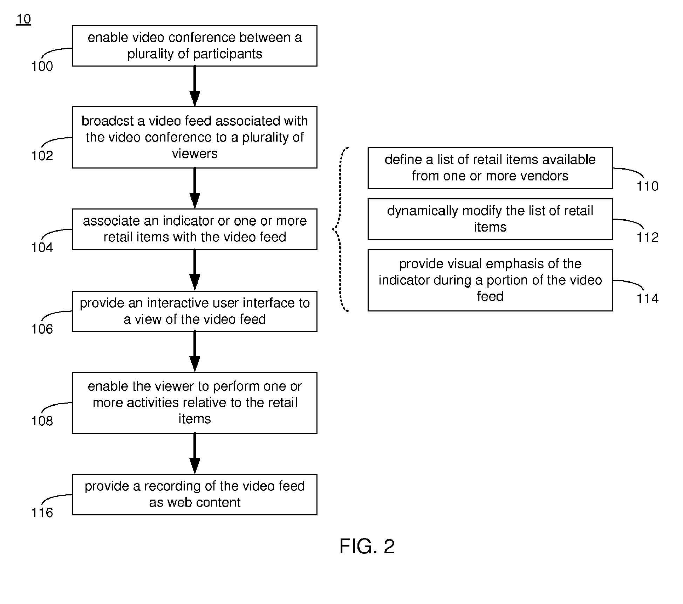

In FIGS. 1 & 2, there is shown video conferencing process 10. Video conferencing process 10 may be implemented as a server-side process, a client-side process, or a hybrid server-side / client-side process. For example, video conferencing process 10 may be implemented as a purely server-side process via video conferencing process 10s. Alternatively, video conferencing process 10 may be implemented as a purely client-side process via one or more of client-side application 10c1, client-side application 10c2, client-side application 10c3, and client-side application 10c4. Alternatively still, video conferencing process 10 may be implemented as a hybrid server-side / client-side process via video conferencing process 10s in combination with one or more of client-side application 10c1, client-side application 10c2, client-side application 10c3, and client-side application 10c4. Accordingly, video conferencing process 10 as used in this disclosure may include any combination of video conferencing process 10s, client-side application 10c1, client-side application 10c2, client-side application 10c3, and client-side application 10c4.

Referring also to FIG. 2, and as will be discussed below in greater detail, video conferencing process 10 may enable 100 a video conference between a plurality of video conference participants. Video conferencing process 10 may broadcast 102 a video feed associated with the video conference to a plurality of viewers. Video conferencing process 10 may associate 104 an indicator of one or more retail items with the video feed. Video conferencing process 10 may also provide 106 an interactive user interface to a viewer of the video feed in response to a selection of the indicator by the viewer. Video conferencing process 10 may further enable 108 the viewer to perform one or more activities relative to the one or more retail items via the interactive user interface.

Video conferencing process 10s may be a server application and may reside on and may be executed by computing device 12, which may be connected to network 14 (e.g., the Internet or a local area network). Examples of computing device 12 may include, but are not limited to: a personal computer, a laptop computer, a personal digital assistant, a data-enabled cellular telephone, a notebook computer, a television with one or more processors embedded therein or coupled thereto, a server computer, a series of server computers, a mini computer, a mainframe computer, or a dedicated network device.

The instruction sets and subroutines of video conferencing process 10s, which may be stored on storage device 16 coupled to computing device 12, may be executed by one or more processors (not shown) and one or more memory architectures (not shown) included within computing device 12. Examples of storage device 16 may include but are not limited to: a hard disk drive; a tape drive; an optical drive; a RAID device; a random access memory (RAM); a read-only memory (ROM); and all forms of flash memory storage devices.

Network 14 may be connected to one or more secondary networks (e.g., network 18), examples of which may include but are not limited to: a local area network; a wide area network; or an intranet, for example.

Examples of client-side applications 10c1, 10c2, 10c3, 10c4 may include but are not limited to a web browser, a web browser plug-in or applet, a game console user interface, a video conference user interface, or a specialized application (e.g., an application running on e.g., the Android tm platform, the iOS tm platform, the Blackberry tm platform). The instruction sets and subroutines of client-side applications 10c1, 10c2, 10c3, 10c4, which may be stored on storage devices 20, 22, 24, 26 (respectively) coupled to client electronic devices 28, 30, 32, 34 (respectively), may be executed by one or more processors (not shown) and one or more memory architectures (not shown) incorporated into client electronic devices 28, 30, 32, 34 (respectively). Examples of storage devices 20, 22, 24, 26 may include but are not limited to: hard disk drives; tape drives; optical drives; RAID devices; random access memories (RAM); read-only memories (ROM), and all forms of flash memory storage devices.

Examples of client electronic devices 28, 30, 32, 34 may include, but are not limited to, data-enabled, cellular telephone 28, laptop computer 30, personal digital assistant 32, personal computer 34, a notebook computer (not shown), a server computer (not shown), a gaming console (not shown), a television (not shown), a tablet computer (not shown) and a dedicated network device (not shown). Client electronic devices 28, 30, 32, 34 may each execute an operating system, examples of which may include but are not limited to Microsoft Windows tm, Android tm, WebOS tm, iOS tm, Redhat Linux tm, or a custom operating system.

The various client electronic devices (e.g., client electronic devices 28, 30, 32, 34) may be directly or indirectly coupled to network 14 (or network 18). For example, data-enabled, cellular telephone 28 and laptop computer 30 are shown wirelessly coupled to network 14 via wireless communication channels 44, 46 (respectively) established between data-enabled, cellular telephone 28, laptop computer 30 (respectively) and cellular network / bridge 48, which is shown directly coupled to network 14. Further, personal digital assistant 32 is shown wirelessly coupled to network 14 via wireless communication channel 50 established between personal digital assistant 32 and wireless access point (i.e., WAP) 52, which is shown directly coupled to network 14. Additionally, personal computer 34 is shown directly coupled to network 18 via a hardwired network connection.

WAP 52 may be, for example, an IEEE 802.11a, 802.11b, 802.11g, 802.1 In, Wi-Fi, and/or Bluetooth device that is capable of establishing wireless communication channel 50 between personal digital assistant 32 and WAP 52. As is known in the art, IEEE 802.11x specifications may use Ethernet protocol and carrier sense multiple access with collision avoidance (i.e., CSMA/CA) for path sharing. The various 802.11x specifications may use phase-shift keying (i.e., PSK) modulation or complementary code keying (i.e., CCK) modulation, for example. As is known in the art, Bluetooth is a telecommunications industry specification that allows e.g., mobile phones, computers, and personal digital assistants to be interconnected using a short-range wireless connection.

As generally discussed above with reference to FIG. 2, video conferencing process 10 may enable 100 a video conference between a plurality of video conference participants. Video conferencing process 10 may broadcast 102 a video feed associated with the video conference to a plurality of viewers. Video conferencing process 10 may associate 104 an indicator of one or more retail items with the video feed. Video conferencing process 10 may also provide 106 an interactive user interface to a viewer of the video feed in response to a selection of the indicator by the viewer. Video conferencing process 10 may further enable 108 the viewer to perform one or more activities relative to the one or more retail items via the interactive user interface.

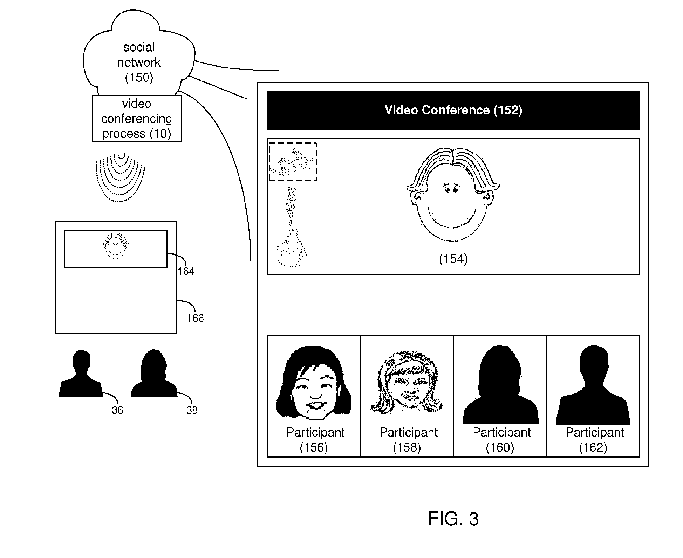

As is known in the art, users of social networks may be able to participate in group communication sessions, such as multiuser video conferences that may allow for virtual gatherings of people so that they may chat about specific topics. For example, and referring also to FIG. 3, assume for illustrative purposes that users 36, 38, 40, 42 are all members of social network 150. Further, assume that a video conference (e.g. video conference 152) will be hosted by individual (e.g. host 154). During video conference 152, host 154 may interact with various participants of video conference 152. Assume for illustrative purposes that video conference 152 may only accommodate a defined number of participants (e.g. a maximum of ten participants). For example, participants 156, 158, 160, and 162 may participate in video conference 152 along with host 154.

While the following discussion concerns video conference 152 being enabled 100 within social network 150, this is for illustrative purposes only and is not intended to be a limitation of this disclosure, as other configurations are possible. For example, video conference 152 may be enabled 100 outside of social network 150 by way of e.g. a stand-alone communications application / product (not shown). For illustrative purposes, further assume that video conference 152 may be enabled 100 through computing device 12, wherein (in this example) users 36, 38 may access video conference 152 via client electronic devices 28, 30 (respectively).

Accordingly, video conferencing process 10 may enable 100 a video conference (e.g., video conference 152) between a plurality of video conference participants (e.g., host 154 and participants 156, 158, 160, 162). Additionally, in order to provide video conference 152 to an audience larger than e.g., ten people, video conferencing process 10 may be configured to broadcast 102 a video feed (e.g., in the form of video 164) associated with video conference 152 to a plurality of viewers (e.g., users 36, 38).

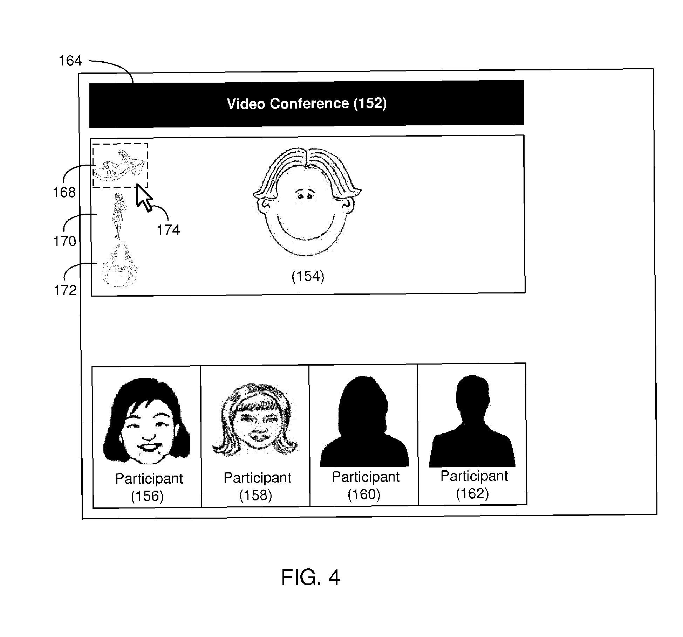

Referring also to FIG. 4, video 164 may be provided to users of video conferencing process 10 who were e.g. not participants in video conference 152 (e.g. users 36, 38). For example, video 164 may be broadcast 102 to e.g. users 38, 40 via network 14 and/or network 18 so that video 164 may be received by client electronic devices 28, 30 (respectively) and rendered by viewer application 166 (e.g. a user interface of a video sharing platform).

Video content may often include, or be amendable to, a retail component. For example, some video content, such as advertisements, may be directly focused toward promoting one or more specific items that may be purchased by a person viewing the video content. Other video content may have a less direct retail component. For example, a video about an activity, such as adventure mountain biking, may be amenable to a retail component in that a person viewing the video may likely be interested in the outdoors in general, and mountain biking in particular. As such, a video on adventure mountain biking may be amenable to a retail component for outdoor apparel, mountain bikes and accessories, etc. That is, a person interested in adventure mountain biking may potentially be interested in purchasing apparel for mountain biking, purchasing a mountain bike or mountain biking accessories. As such, even a video that is not directly intent on marketing items for purchase may be coupled with a retail component.

In an embodiment of the present disclosure, the content of a video conference (such as video conference 152) may similarly be coupled with a retail component. For example, assume for the purpose of illustration that video conference 152 is a lifestylecentric video conference in which host 154 may be a fashion editor of a print, online, or television publication. During the course of video conference 152 host 154 and participants 156, 158, 160, 162 may discuss fashion trends for the upcoming spring season. During the course of video conference 152 host 154 and participants 156, 158, 160, 162 may discuss specific products (such as individual items from a particular designer), as well a general classes of products (e.g., spring sandal trends, popular dress styles, and popular handbag styles). Video conferencing process 10 may facilitate viewers (e.g., users 36, 38) discovery of products being discussed during video conference 152. In an embodiment, video conferencing process 10 may associate 104 an indicator of one or more retail items with the video feed. For example, video conferencing process 10 may associated 104 indicators 168, 170, 172 of various retail items, or categories or classes of retail items with video 164, which may be a broadcast of video conference 152 that is watched by user 36.

As shown in FIG. 4, in the illustrated example in which video conference may include a discussion of spring fashion trends including sandal trends, dress styles and handbag styles, indicators 168, 170, and 172 may respectively include graphical representations of sandals. As such, in addition to providing user 36 (as a viewer of video 164) with an indication of an opportunity to discover products that may be related to the discussion occurring in video conference 152, indicators 168, 170, 172 may also alert user 36 as to the type of products that are available for discovery (e.g., through the use of graphical depictions). In the illustrated embodiment of FIG. 4, indicators 168, 170, 172 may be associated 104 with the video feed (e.g., video 164) as by being superimposed, or otherwise embedded in, the video being displayed. In some embodiments the indicators may be associated 104 with the video feed in other manners. For example, one or more indicators of retail products may be associated 104 with the video feed as by being included in associated content, such as in a frame including the video interface for playing video 164, or the like.

In an embodiment, associating 104 the indicator of the one or more retail items with the video feed may include defining 110 a list of retail items available from one or more vendors. For example, hose 154, one of participants 156, 158, 160, 162, a producer of video conference, etc., may create a curated list of retail items that may be discoverable by viewers of the video feed (e.g., broadcast video 164). A list, or more than one, list may be defined 110 for each of the indicators associated 104 with the video feed. In some embodiments, the list of retail items may be defined 110 prior to associating 104 the related indicator with the video feed. For example, the list of retail items could be defined prior to the beginning of video conference 152. In some embodiments, associating 104 the indicator may include dynamically modifying 112 the list of retail items. For example, a list of retail items may be defined 110 prior to the beginning of video conference 152. Video conferencing process 10 may, however, allow the list of retail items to be dynamically modified 112 after video conference 152 has begun, including after the related indicator has been associated 104 with the video feed. For example, items could be added to the list or removed from the list during video conference 152. Such dynamic modification 112 of the list could be, for example, in response to comments received from viewers of video 164, or from unscripted ideas or discussions that may occur during video conference 152. In addition, dynamically modifying 112 the list may include defining 110 the list of retail items while video conference 152 is ongoing.

According to an embodiment, the indicator (e.g., indicators 168, 170, 172) may include a link to the defined 110 list. For example, indicators 168, 170, 172 may include links to respective lists of retail items, in which the list may be maintained separate from the video feed and/or the indicator. In some embodiments, the indicator may include a launchable instantiation of the list of retail items. For example, an indicator may include a widget or applet, etc., and the list of retail items related to a indicator may be embedded in the indicator, such that activating the indicator may launch an instantiation of the list of retail items.

Associating 104 the indicator(s) with the video feed may include providing 114 a visual emphasis of an indicator during a defined portion of the video feed. Continuing with the above example in which video conference 152 may include a discussion of spring fashion trends, video conference 152 may include topical discussions of sandal styles, dress styles, and handbag styles. For example, sandal styles may be discussed, which may lead into a discussion of dress styles, and conclude with a discussion of handbag styles. Therefore, while each topic may be discussed during the course of video conference 152, the topics may be discussed during different temporal portions of video conference 152. Accordingly, in an embodiment, video conferencing process 10 may provide 114 a visual emphasis of an indicator during a defined portion of the video feed. For example, a visual emphasis may be provided 114 for indicator 168 of a sandal during a portion of video conference during which sandal styles are being discussed. In an embodiment, providing 114 the visual emphasis may be in response to host 154, a participant (e.g., one of participants 156, 158, 160, 160) or a producer, etc., of video conference 152 providing an input to cause the visual emphasis of a particular indicator at a particular portion of video conference 154. Various different techniques may be utilized for providing 114 visual emphasis, such as placing a box or marquee around an indicator, making a changing a coloring or transparency level of an indicator, or any other suitable technique for providing visual emphasis.

In some embodiments, video conferencing process 10 may allow one or more of the indicators to be turned on and off (e.g., by a host or participant of the video conference, by a producer of the video conference, etc.), thereby providing the ability of viewers of the video broadcast to discover retail items associated with the video feed, and removing the ability of viewers of the broadcast of video 164 to discover retail items associated with the broadcast of video 164. In various embodiments, video conferencing process may allow one or more of the indicators to be turned on and off based on the viewer (e.g., the indicators may be turned on for some users, but turned off for other users), based on portions of the video conference, etc. Further, in some embodiments the indicators may be individually turned on and off (e.g., one or more indicators may be turned on, and one or more indicators may be turned off). For example, an indicator may only be turned on once a discussion relevant to the items relating to the indicator are discussed during the video conference, and/or an indicator may only be turned on during the portion of the video conference during which the items relating to the indicator are being discussed. Other configurations may similarly by utilized.

Video conferencing process 10 may also provide 106 an interactive user interface to a viewer of the video feed in response to a selection of the indicator by the viewer. For example, the indicator (e.g., indicators 168, 170, 172) may be selectable items, such as links to lists of retail items, widgets or applets that may be activated or launched, etc., as generally discussed above. As such a viewer of the video feed (e.g., user 36 who may be watching broadcast video 164) may select an indicator using onscreen pointer 174 (e.g., which may be controlled by a mouse or other pointing device; not shown), a touch screen user interface, or the like. For example, in response to user 36 (as a viewer of broadcast video 164) selecting indicator 168 using onscreen pointer 174, video conferencing process 10 may provide 106 interactive user interface 176. In an embodiment, the interactive user interface may include a non-disruptive user interface relative to the video feed. For example, the interactive user interface may not disrupt the continued watching of broadcast video 164, as by obscuring the video display window or pane, by navigating away from the display of the broadcast video, etc. For example, in the illustrated embodiment, interactive user interface 175 may be provided 106 in a space adjacent to the display of broadcast video 164. Various other implementations may be equally utilized. For example, the interactive could be provided as a pop-out feature that may permit viewer interaction without disrupting broadcast video 164.

As generally discussed above, the indicator (e.g., one or more of indicators 168, 170, 172) may include a link to a list of retail item and/or may be an embedded feature providing a launchable instantiation of the list of retail items. Accordingly, in response to a viewer selecting an indicator, video conferencing process 10 may provide 106 interactive user interface 176, which may include the list of retail items related to the indicator. Video conferencing process 10 may further enable 108 the viewer to perform one or more activities relative to the one or more retail items via the interactive user interface. For example, from within interactive user interface 176, user 36 may perform various activities relative to the displayed list of retail items related to the selected indicator, and/or may perform various activities relative to individual items included within the displayed list. For example, interactive user interface 176 may include a scrollable list of retail items that may be navigated (e.g., via scrollbar 178 or other suitable navigation mechanisms, such as gesture scrolling via a touch screen user interface). As shown, the list of retail items may include a graphical list, a text-based list, and/or a combined graphical/text-based list of retail items.

In some implementations, the interactive user interface (e.g., interactive user interface 176) may allow the viewer to receive additional information regarding at least one of the items included in the interactive user interface. For example, as shown the interactive user interface may include some information regarding the items (e.g., a picture or graphical representation of the items and a price for the items). In some embodiments, the interactive user interface may allow the viewer to receive additional information about one or more of the items. For example, the user may select an item from within the interactive user interface, and in response to selecting the item video conferencing process 10 (and/or another process, such as an e-commerce process which may be invoked by selecting items within the interactive user interface) may provide additional information regarding the selected item. Example of additional information may include a detailed description of the item, features of the item, a listing of vendors through which the item can be purchased, user reviews of the item, additional images of the item such as 3-dimensional interactive or rotatable images, etc. In some embodiments, the viewer may receive the additional information directly within the interactive user interface. In some embodiments, the viewer may receive the additional information regarding the selected item in a different interface, through a different application than the application that allows watching broadcast video 164, a different tab or window, or the like.

In some implementations, the interactive user interface (e.g., interactive user interface 176) may allow the viewer to purchase at least one of the items included in the list from a vendor. For example, one or more of the items displayed within the interactive user interface may include a option to buy the associated item (such as a link, button, etc.). In response to selecting the option to buy the item the may be added to an electronic shopping cart associated with the viewer, and/or a transaction to purchase the item may completed in a generally conventional manner. In some embodiments purchasing an item may require the viewer to provide financial and/or shipping information, or may utilized stored financial and/or shipping information. For example, in some embodiments, in response to a viewer selecting an item video conferencing process 10 (and/or another process, such as an e-commerce application) may provide the viewer with a list of vendors from which the item may be purchased. The viewer may select a desired vendor and the transaction may be completed. In some embodiments, if the viewer has an existing account with the selected vendor, the transaction may be processed utilizing financial and shipping information associated with the user's account for the selected vendor. Other similar features and implementations may similarly be utilized.

In some embodiments, the interactive user interface may allow the viewer to save one or more selected items (and/or the entire list of items) to a viewer specific list, such as a wish-list or shopping list. In some embodiments, the wish-list may be maintained or created by social network 150. In some embodiments, the wish-list may be maintained or created by a vendor through which the selected items may be purchased. In a situation in which the viewer has an existing account with a selected vendor of the selected item, the selected item may be saved to a wish-list maintained or created by the vendor, and may be associated with existing account of the viewer.

In some embodiments, the interactive user interface may facilitate the viewer sharing information about at least one of the one or more items with another individual. For example, the viewer may wish to solicit opinions regarding the item prior to making a purchase. As such, the interactive user interface may enable the viewer to share information regarding the item with friends, family, or even strangers, for the purpose of gather opinions or information about the selected item. In an example embodiment, one or more of the items within the interactive user interface may include an option to share the item (such as a link, button, or the like). In response to selecting the option to share the item, video conferencing process 10 (and/or another process or application) may allow information about the item to be communication to other individuals. For example, the viewer may be enabled to identify the individuals with whom to share the item. In various embodiments, information regarding the selected items may be shared via social network 150 (e.g., as by sharing with selected social networking contacts of the viewer), email, instant messaging, etc. Various other mechanisms for sharing selected items with others may be implemented.

In an embodiment, video conferencing process 10 may also provide 116 a recording of the video feed as web content associated with one or more webpages. The recording of the video feed may include the indicator of the one or more retail items. For example, various viewers may watch the broadcast video feed generally contemporaneously with the video conference. In addition to broadcasting the video feed, video conferencing process 10 may also record the video feed. For example, in order to provide video conference 152 to an even larger audience larger than the participants and viewers of the broadcast 102 video feed, the video feed may be recorded such that the recording may be consumed by various other people at later times. Further, the indicators may be embedded with the recorded video feed, such that people watching the recording of the video feed may similarly be enabled to discover retail items that may be associated with the video.

In various embodiments, the recorded video feed may be included as video content on various webpages. For example, the recorded video feed may be utilized as a rich media advertisement. Similarly, the recorded video feed may be provided as a video on demand product, for example, on a video sharing website or service (such as an internet TV service, etc.). In some embodiments, the recorded video feed may be included as a video component or video content on a webpage, such as on a retailer website, a social networking page, etc. In any such implementation, the embedded indicators of retail items may be utilized by viewers of the recorded video feed to discover retail items that may be associated with the video content.

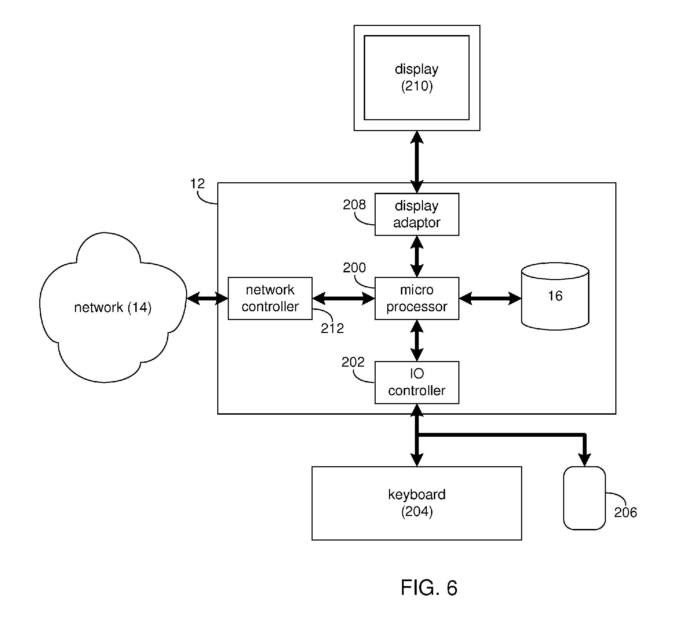

Referring also to FIG. 6, there is shown a diagrammatic view of computing system 12. While computing system 12 is shown in this figure, this is for illustrative purposes only and is not intended to be a limitation of this disclosure, as other configuration are possible. For example, any computing device capable of executing, in whole or in part, video conferencing process 10 may be substituted for computing device 12 within FIG. 6, examples of which may include but are not limited to client electronic devices 28, 30, 32, 34.

Computing system 12 may include microprocessor 200 configured to e.g., process data and execute instructions / code for video conferencing process 10. Microprocessor 200 may be coupled to storage device 16. As discussed above, examples of storage device 16 may include but are not limited to: a hard disk drive; a tape drive; an optical drive; a RAID device; an NAS device, a Storage Area Network, a random access memory (RAM); a read-only memory (ROM); and all forms of flash memory storage devices. IO controller 202 may be configured to couple microprocessor 200 with various devices, such as keyboard 204, mouse 206, USB ports (not shown), and printer ports (not shown). Display adaptor 208 may be configured to couple display 210 (e.g., a CRT or LCD monitor) with microprocessor 200, while network adapter 212 (e.g., an Ethernet adapter) may be configured to couple microprocessor 200 to network 14 (e.g., the Internet or a local area network).

As will be appreciated by one skilled in the art, the present disclosure may be embodied as a method (e.g., executing in whole or in part on computing device 12), a system (e.g., computing device 12), or a computer program product (e.g., encoded within storage device 16). Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium (e.g., storage device 16) having computer-usable program code embodied in the medium.

Any suitable computer usable or computer readable medium (e.g., storage device 16) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object oriented programming language such as Java, C#.NET, PHP, C++ or the like. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet (e.g., network 14).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor (e.g., processor 200) of a general purpose computer / special purpose computer / other programmable data processing apparatus (e.g., computing device 12), such that the instructions, which execute via the processor (e.g., processor 200) of the computer or other programmable data processing apparatus, create means for implementing the functions/acts specified in the flowchart and/or block diagram block or blocks.

These computer program instructions may also be stored in a computer-readable memory (e.g., storage device 16) that may direct a computer (e.g., computing device 12) or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer (e.g., computing device 12) or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Having thus described the disclosure of the present application in detail and by reference to embodiments thereof, it will be apparent that modifications and variations are possible without departing from the scope of the disclosure defined in the appended claims.

## Claims

1. A computer-implemented method comprising:
enabling, by a computing device, a video conference between a plurality of participants;
broadcasting a video feed associated with the video conference to a plurality of viewers;
associating an indicator of one or more retail items with the video feed;
providing an interactive user interface to a viewer of the video feed in response to a selection of the indicator by the viewer; and
enabling the viewer to perform one or more activities relative to the one or more retail items via the interactive user interface.

2. The computer-implemented method of claim 1, wherein associating the indicator includes defining a list of retail items available from one or more vendors.

3. The computer-implemented method of claim 2, wherein associating the indicator includes dynamically modifying the list of retail items.

4. The computer-implemented method of claim 2 or 3, wherein the indicator includes a link to the list of retail items.

5. The computer-implemented method of one of claims 2 - 4, wherein the indicator includes a launchable instantiation of the list of retail items.

6. The computer-implemented method according to any one of the preceding claims, wherein the interactive user interface includes a non-disruptive user interface relative to the video feed.

7. The computer-implemented method according to any one of the preceding claims, wherein the one or more activities include one or more of: purchasing at least one of the one or more items from a vendor, saving at least one of the one or more items to a viewer-specific list, receiving additional information regarding at least one of the one or more items, and sharing information about at least one of the one or more items with another individual.

8. The computer-implemented method according to any one of the preceding claims, further including providing a visual emphasis of the indicator during a defined portion of the video feed.

9. The computer-implemented method according to any one of the preceding claims, further including providing a recording of the video feed as web content associated with one or more webpages, the recording of the video feed including the indicator of the one or more retail items.

10. The computer-implemented method according to any one of the preceding claims, wherein the web content includes one or more of a rich media advertisement, a video on demand product, and video component of a webpage.

11. A computing system including a processor and a memory configured to perform operations comprising:
enabling a video conference between a plurality of participants;
broadcasting a video feed associated with the video conference to a plurality of viewers;
associating an indicator of one or more retail items with the video feed;
providing an interactive user interface to a viewer of the video feed in response to a selection of the indicator by the viewer; and
enabling the viewer to perform one or more activities relative to the one or more retail items via the interactive user interface.

12. The computing system of claim 11, wherein the interactive user interface includes a non-disruptive user interface relative to the video feed.

13. The computing system of one of claims 11 - 12, wherein the processor and the memory are further configured for providing a visual emphasis of the indicator during a defined portion of the video feed.

14. The computing system of one of claims 11 - 13, wherein the processor and the memory are further configured for providing a recording of the video feed as web content associated with one or more webpages, the recording of the video feed including the indicator of the one or more retail items.

15. The computing system of claim 14, wherein the web content includes one or more of a rich media advertisement, a video on demand product, and video component of a webpage.
